Europäisches Patentamt

European Patent Office

Office européen des brevets

(19)

(11) Veröffentlichungsnummer: **0 005 197**
**A1**

(12) # EUROPÄISCHE PATENTANMELDUNG

(21) Anmeldenummer: **79101127.3**

(22) Anmeldetag: **12.04.79**

(51) Int. Cl.²: **D 06 F 39/08, F 16 K 17/32,**
**F 16 L 35/00, F 17 D 5/02**

(30) Priorität: **19.04.78 DE 2817001**

(43) Veröffentlichungstag der Anmeldung: **14.11.79**
**Patentblatt 79/23**

(84) Benannte Vertragsstaaten: **FR GB**

(71) Anmelder: **Höffgen, Gerd, Altenrather strasse 30,**
**D-5204 Lohmar (DE)**

(72) Erfinder: **Höffgen, Gerd, Altenrather strasse 30,**
**D-5204 Lohmar (DE)**

(54) **Schlauchbruchsicherung zwischen einer Druckmittelleitung und einer geräteseitigen Zuführung.**

(57) Bei einer Schlauchvorrichtung zwischen einer geräteseitigen Zuführung und dem Anschluß einer Wasch- oder Spülmaschine ist vorgesehen, daß das mit der Druckmittelleitung direkt
oder indirekt verbindbare Anschlußglied (1) mit dem geräteseitigen Anschlußglied (36) über einen der Zuführung der Flüssigkeit
dienenden ersten Schlauchteil (35) dichtend umhüllenden zweiten Schlauchteil (38) verbunden ist, wobei der von beiden
Schlauchteilen eingeschlossene Zwischenraum (41) mit einer
Abflußleitung und/oder dem Hilfsglied (14, 18, 23, 44) eines die
Flüssigkeitszufuhr zum ersten Schlauchteil (35) absperrenden
Absperrventils (4) verbunden ist.

Zwecks sicherer Absperrung der Flüssigkeitszufuhr beim
Platzen des inneren Schlauches (35) ist ferner vorgesehen, daß
das Absperrventil (4) einen durch ein Riegelglied (14) in Offenstellung gehaltenen Schließkörper (9) aufweist und daß der
Zwischenraum (41) zwischen den beiden Schlauchteilen (35,
38) mit einem Zylinder (25) für einen Steuerkolben (23) in
Verbindung steht, der im Entriegelungssinn mit dem dem
Schließkörper (9) zugeordneten Riegelglied (14) in Wirkverbindung steht.

Gerd Höffgen
Altenratherstraße 30

5204 Lohmar, 16.04.78

00005197

## BEZEICHNUNG GEÄNDERT
### siehe Titelseite

SCHLAUCHVORRICHTUNG

Die Erfindung bezieht sich auf eine Schlauchvorrichtung zwischen einer Druckmittelleitung und der geräteseitigen Zuführung einer unter Druck stehenden Flüssigkeit zu einer
Vorrichtung oder einer Maschine, insbesondere zum Anschluß einer Wasch- oder Spülmaschine an einen Wasserleitungsanschluß, wobei dem mit der Druckmittelleitung
direkt oder indirekt verbindbaren Schlauchteil und dem geräteseitigen Schlauchteil
je ein Anschlußglied zugeordnet ist.

Bei Schlauchvorrichtungen vorgenannter Gattung, insbesondere solchen zwischen einem
Wasserleitungsanschluß und einer Waschmaschine bzw. einer Spülmaschine besteht das
Problem, daß bei einem Defekt, insbesondere einem Reißen oder Platzen des Schlauches,
der Wasserleitungsanschluß mit Sicherheit unabhängig von der aus der Schadstelle des
die Flüssigkeit in die Maschine weiterleitenden Schlauchteils, auftretenden Flüssigkeitsmenge ein schnelles Schließen der Druckmittelleitung erfolgt. Dieses Problem hat man
bisher dadurch versucht zu lösen, daß man den die Flüssigkeit in die Maschine weiterleitenden Schlauchteil mit der Druckmittelleitung über ein Ventil verband, dessen im
Schließsinne federbelasteter Schließkörper sich nur in Abhängigkeit des von dem Schließkörper in Flußrichtung der Flüssigkeit von diesem aufbauenden Staudruck selbsttätig
schließt. Nachteilig bei diesen bekannten Lösungen ist, daß bei kleineren Schadstellen
des die Flüssigkeit in die Maschine weiterleitenden Schlauchteils sich zumeist ein zu
geringer Staudruck vor dem Schließkörper des Ventils aufbaut. Dies hat zur Folge, daß
des öfteren über einen größeren Zeitraum größere Mengen an Flüssigkeit austreten,
wodurch sich mit hohen Kosten belastete Schäden einstellen.

Ausgehend von diesen Erkenntnissen ist es Aufgabe der Erfindung, eine Schlauchvorrichtung der eingangs vorausgesetzten Gattung zu schaffen, die mit Sicherheit, unabhängig von der aus einer Schadstelle des die Flüssigkeit zu einer geräteseitigen Zuführung weiterleitenden Schlauchteil austretenden Flüssigkeitsmenge diese ohne Schaden anzurichten, in einen Abfluß weiterleitet und oder die Flüssigkeitszufuhr in die
Schlauchvorrichtung wirksam unterbricht.

Diese Aufgabe wird nach der Erfindung dadurch gelöst, daß das mit der Druckmittelleitung direkt oder indirekt verbindbare Anschlußglied mit dem geräteseitigen Anschlußglied über einen den der Zuführung der Flüssigkeit dienenden ersten Schlauchteil dichtend umhüllenden zweiten Schlauchteil verbunden ist, und daß der von den beiden
Schlauchteilen gebildete Zwischenraum mit einer Abflußleitung und oder dem Hilfsglied eines die Flüssigkeitszufuhr zum ersten Schlauchteil absperrenden Absperrventils
oder dergleichen verbunden ist.

Dabei ist insbesondere der Lösung der Vorzug zu geben, bei der dem Absperrventil für
die Druckmittelleitung ein dem Absperren diesem dienenden Hilfsglied zugeordnet ist.
Eine solche Lösung weist den Vorteil auf, daß bei dieser bei kleinster Verlustmenge
an Flüssigkeit unabhängig von der Größe der Schadstelle des ersten Schlauchteils eine
sichere Absperrung der Flüssigkeitszufuhr zu diesem erfolgt.

1

00005197

Zum Schutz von Räumen gegenüber aus Schadstellen der Vorrichtung bzw. der Maschine bzw. aus unsachgemäß verschlossenen Öffnungen dieser ausströmenden Flüssigkeit ist in Weiterbildung der Erfindung vorgesehen, daß das Riegelglied des Absperrventils mit einem elektrischen oder elektromechanischen Steuerorgan verbunden ist, das mit einem bodenseitigen, durch Flüssigkeit aussteuerbaren Impulsgeber in Wirkverbindung steht. Eine solche Lösung weist insbesondere den Vorzug auf, daß das Hilfsglied des Absperrventils in diesem Falle eine Doppelausnutzung bei erhöhter Sicherheit erfährt.

Eine herstellungstechnisch und besonders kostengünstige Lösung ergibt sich nach einem weiteren Gedanken der Erfindung dadurch, daß das Absperrventil einen durch ein Riegelglied in Offenstellung gehaltenen Schließkörper aufweist, und daß der Zwischenraum zwischen dem ersten und zweiten Schlauchteil mit einem Zylinder für einen Steuerkolben oder dergleichen in Verbindung steht, der im Entriegelungssinne mit dem, dem Schließkörper zugeordneten Riegelglied in Wirkverbindung steht.

Dabei ist es aus baulichen und funktionellen Gründen zweckdienlich, daß das Riegelglied des Absperrventils einen in eine Einkerbung oder Aussparung des Schließkörpers im Verriegelungssinne eingreifenden Stift oder dergleichen aufweist, der mit einer radialen Aussparung oder dergleichen versehen ist, in die eine Kugel einer federbelasteten Kugelraste eingreift. Eine besonders wirksame Entriegelung des Schließkörpers ergibt sich dabei nach der Erfindung dadurch, daß der Steuerkolben einen auf eine Schräge des Stiftes einwirkenden Vorsprung aufweist.

Zur baulich kompakten Gestaltung des Anschlußgliedes für die Druckmittelleitung ist nach der Erfindung ferner vorgesehen, daß das den Steuerkolben des Absperrventils aufnehmende Gehäuseteil eine Führungsbohrung oder mehrere Führungsbohrungen für die Sperrglieder des Riegelgliedes aufweist.

Für eine sichere und wirkungsvolle Führung des Betätigungsorgans des Hilfsgliedes ist schließlich nach der Erfindung noch vorgesehen, daß die Stirnwandung des Ventilgehäuses des Steuerkolbens eine von einem Vorsprung dieses durchsetzte Führungsbohrung oder dergleichen aufweist, und daß der Vorsprung in Wirkverbindung mit dem Verriegelungsglied für den Schließkörper des Absperrventils in entriegelndem Sinne steht.

Weitere Eigenschaften, Merkmale und Vorteile der vorliegenden Erfindung können der nachfolgenden Beschreibung der Zeichnung, welche zwei Ausführungsbeispiele darstellt, entnommen werden.

Es zeigen:

Fig. 1.   Eine Waschmaschine mit der erfindungsgemäßen Schlauchvorrichtung.

Fig. 2.   das mit dem Druckmittelanschluß verschraubbare, mit einem Absperrventil versehene Anschlußglied der erfindungsgemäßen Schlauchvorrichtung im Längsschnitt.

Fig. 3.   einen Querschnitt durch das Anschlußglied nach der Linie III - III in Fig. 1.

Fig. 4.   einen Querschnitt durch das Anschlußglied nach der Linie IV - IV in Fig. 1.

Fig. 5.   eine erfindungsgemäße Schlauchvorrichtung nach Fig. 1. mit einem dem Hilfsglied deren Absperrventil zusätzlich zugeordnetem bodenseitigem Flüssigkeitsimpulsgeber.

Fig. 6.   einen Querschnitt durch das dem Schließkörper des Absperrventils in Fig. 5. zugeordneten elektromagnetisch betätigten Sperrgliedes.

00005197

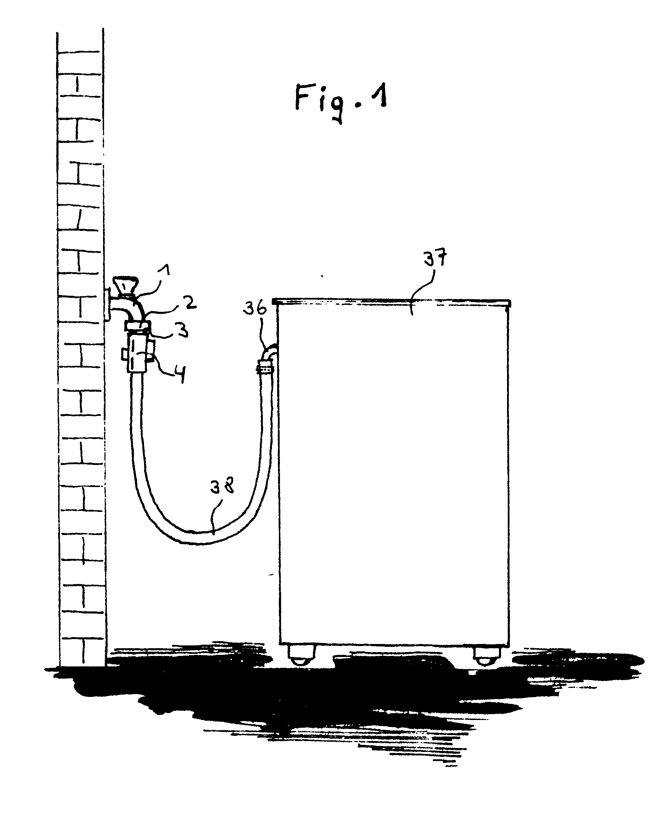

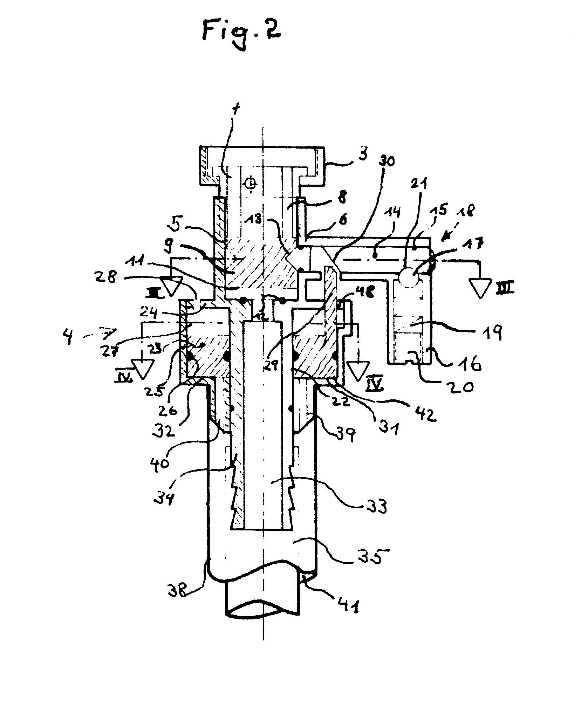

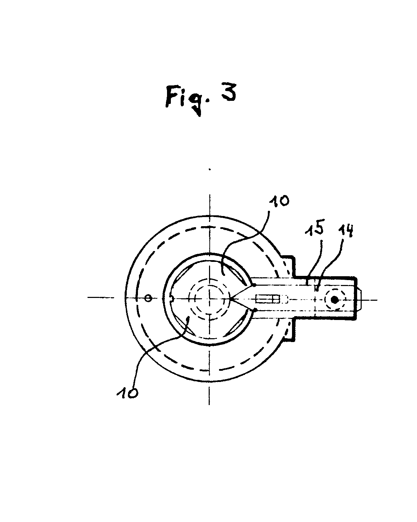

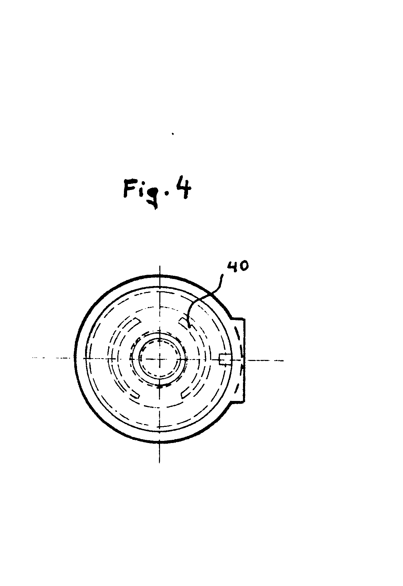

Bei dem in den Fig. 1 bis 4 dargestellten Ausführungsbeispiel ist mit 1 ein ortsfester Druckmittelanschluß einer Wasserleitung bezeichnet, der als Schraubstück mit einem von Hand schließbaren Ventil ausgeführt ist, das einen abflußseitigen Schraubanschluß 2 aufweist. Mit dem Schraubanschluß 2 ist die Überwurfmutter 3 eines in Fig. 2 in einzelnen dargestellten Absperrventils 4 verschraubt. Das Absperrventil 4 weist einen mit der Zylinderbohrung 5 eines Ventilgehäuses 6 verschraubbaren, mit einem Dichtbund 7 versehenen Nippel 8 auf. Der Zylinderbohrung 5 des Ventilgehäuses 6 ist ein zylindrischer Schließkörper 9 mit seitlichen Abflachungen 10 für den Flüssigkeitsdurchtritt zugeordnet. Als Schließfäche ist der Schließkörper 9 mit einer stirnseitigen Dichtfläche 11 versehen, der einen im Ventilgehäuse 6 eingebetteter Dichtring 12 zugeordnet ist in der Stirnseite der Zylinderbohrung 5. Ferner ist der vorzugsweise aus zähhart eingestelltem Kunststoff gefertigte Schließkörper 9 mit einer V-förmigen Aussparung 13 versehen in die ein als Stift 14 ausgeführtes Riegelglied in der dargestellten Öffnungsstellung des Schließkörpers 9 des Absperrventils 4 eingreift. Der Stift 14 ist dabei in einer Querbohrung 15 des Ventilgehäuses 6 geführt, das ferner mit einem seitlichen Gehäuseansatz 16 versehen ist. Im Gehäuseansatz 16 ist eine Kugel 17 einer Kugelraste 18 durch eine Feder 19 in Raststellung gehalten, die sich auf einem Gewindestopfen 20 abstützt. Die Kugel 17 greift dabei in der dargestellten Raststellung des Stiftes 14 in eine Ausnehmung 21 dieser ein.

Ferner ist das Ventilgehäuse 6 mit einer zylindrischen Führung 22 für einen als Ringkolben ausgebildeten Steuerkolben 23 versehen, der über ein o-förmigen Dichtring 48 gegenüber der Führung 22 abgedichtet ist. Als Außenzylinder für den Steuerkolben 23 ist ein mit einer Stirnwand 24 des Ventilgehäuses 6 verschraubter topfförmiger Zylinder 25 vorgesehen, in dem der Steuerkolben 23 über eine o-förmige Dichtung 26 abgedichtet ist. Dabei ist der von der Stirnwand 24 und dem Steuerkolben 23 im Zylinder 25 eingeschlossenen Ringraum 27 über eine Entlüftungsbohrung 28 mit der Atmosphäre verbunden. Der Steuerkolben 23 ist weiterhin mit einem Vorsprung 29 versehen, der die Stirnwand 24 durchsetzt und vor oder an einer Schräge 30 des Stiftes 14 anliegt. Daher hat eine Beaufschlagung der dem Boden 31 des topfförmigen Zylinders 25 zugewandten Stirnseite 32 des Steuerkolbens 23 mit Flüssigkeitsdruck zur Folge, daß dieser über den Vorsprung 29 den Stift 14 radial nach außen verlagert und dadurch den Schließkörper 9 entsperrt wodurch dieser durch den auf ihm lastenden Druck sich auf dem Dichtring 12 anlegt und dadurch die Flüssigkeitszufuhr zu dem mit einer Bohrung 33 versehenen Anschlußstutzen 34 des Ventilgehäuses 6 absperrt.

Auf den Anschlußstutzen 34 ist dabei ein erster innerer Schlauchteil 35 aufgepresst und mittels einer nicht dargestellten Quetschverbindung fest mit dem Ventilgehäuse 6 verbunden. Dabei ist das andere Ende des inneren Schlauchteils 35 mit einem geräteseitigen inneren Anschlußstutzen einer geräteseitigen Wasserzuführung 36 einer Waschmaschine 37 fest und dichtend verbunden. Das innere Schlauchteil 35 ist von einem zweiten, äußeren Schlauchteil 38 umhüllt, das geräteseitig mit einem den inneren Anschlußstutzen 34 umhüllenden äußeren Anschlußstutzen dicht und fest verbunden ist. Hiergegen ist das dem Ventilgehäuse 6 zugeordnete Ende des äußeren Schlauchteils 38 mit einem den Anschlußstutzen 34 des Ventilgehäuses 6 umhüllenden Anschlußstutzen 39 des topfförmigen Zylinders 25 dicht und fest über eine nicht dargestellte Quetschverbindung verbunden. Der Anschlußstutzen 39 ist dabei mit Durchtritten 40 versehen durch die sich bei einem Defekt des inneren Schlauchteils 35 und dem mit dem äußeren Schlauchteil 38 gebildeten Zwischenraum 41 ansammelnde Luft oder Flüssigkeit in den Zylinderraum 42 des Zylinders 25 zur Beaufschlagung dessen Steuerkolben 23 gelangt und sich damit die vorgehend beschriebene Einwirkung durch diesen auf den Stift 14 ergibt.

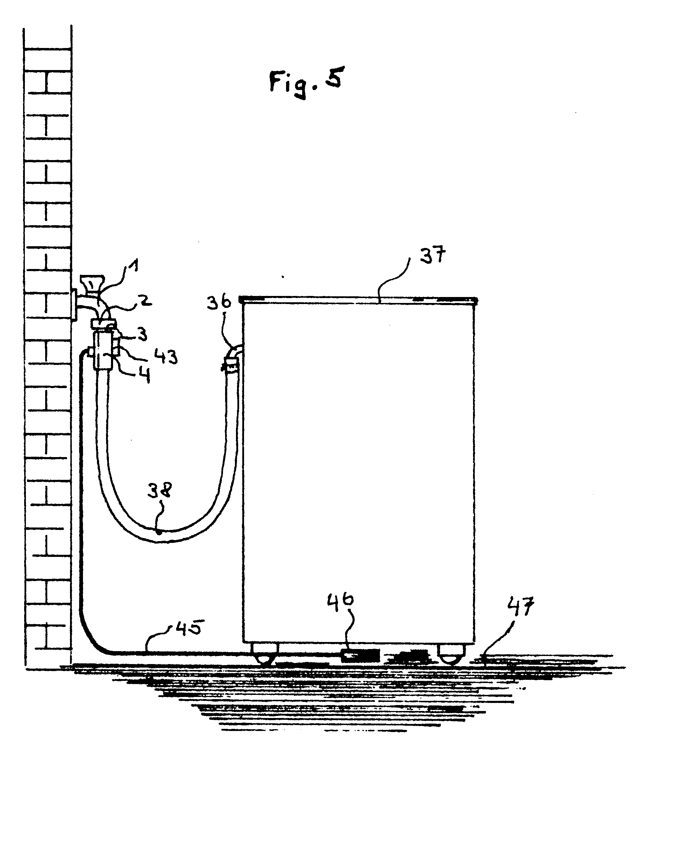

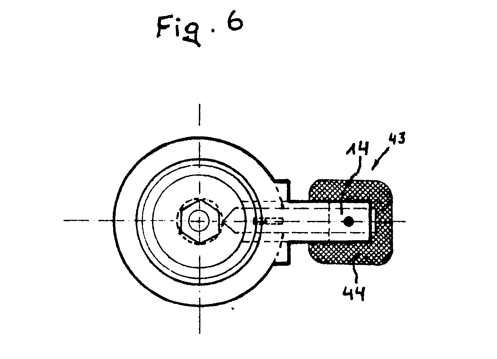

Bei den in den Fig. 5 und 6 dargestellten Ausführungsbeispiel ist das Absperrventil 4 zusätzlich zu seinem hydraulich betätigten Hilfsglied (Steuerkolben 23) mit einem der Entriegelung des Schließkörpers 9 dienenden Magnetauslöser 43 versehen. Der Magnetauslöser 43 weist eine Magnetspule 44 auf, die über eine elektrische Leitung 45 mit dem Steuerkontakt eines durch Flüssigkeit aussteuerbaren Impulsgeber 46 in Wirkverbindung steht, der unter der Waschmaschine 37 auf der Standfläche 47 aufliegt. Dabei hat eine durch eine defekte Dichtung der Waschmaschine ausströmende Flüssigkeitsmenge stattfindende Benässung des Impulsgebers 46 zur Folge, daß die Magnetspule 44 unter Kleinspannung gesetzt wird, wodurch der von dieser umhüllter Stift 14 des Ventilgehäuses 6 aus seiner in den Schließkörper 9 eingreifenden Lage in die Entriegelungsstellung gegen die Kraft der Kugelraste 18 gezogen wird.

Es wird erwähnt, daß auch Lösungen einer Schlauchvorrichtung denkbar sind, bei der der Zwischenraum 41 zwischen dem inneren Schlauchteil 35 und dem äußeren Schlauchteil 38 über einen Zwischenschlauch mit einem Abfluß in Verbindung stehen. Dabei kann der Schließkörper 9 und der Steuerkolben 23 sowie der Stift 14 und die Kugelraste 18 entfallen.

| | |
|---|---|
| 1. Druckmittelanschluß | 27. Ringraum |
| 2. Schraubenanschluß | 28. Entlüftungsbohrung |
| 3. Überwurfmutter | 29. Vorsprung |
| 4. Absperrventil | 30. Schräge |
| 5. Zylinderbohrung | 31. Boden |
| 6. Ventilgehäuse | 32. Stirnseite |
| 7. Dichtbund | 33. Bohrung |
| 8. Nippel | 34. Anschlußstutzen |
| 9. Schließkörper | 35. innerer Schlauchteil |
| 10. Abflachung | 36. geräteseitige Wasserzuführung |
| 11. Dichtfläche | 37. Waschmaschine |
| 12. Dichtring | 38. äußeres Schlauchteil |
| 13. Aussparung | 39. Anschlußstutzen |
| 14. Stift | 40. Durchtritt |
| 15. Querbohrung | 41. Zwischenraum |
| 16. Gehäuseansatz | 42. Zylinderraum |
| 17. Kugel | 43. Magnetauslöser |
| 18. Kugelraste | 44. Magnetspule |
| 19. Feder | 45. elektrische Leitung |
| 20. Gewindestopfen | 46. Impulsgeber |
| 21. Ausnehmung | 47. Standfläche |
| 22. Führung | 48. Führungsbohrung |
| 23. Steuerkolben | |
| 24. Stirnband | |
| 25. Zylinder | |
| 26. Dichtung | |

PATENTANSPRÜCHE

1. Schlauchvorrichtung zwischen einer Druckmittelleitung und einer geräteseitigen Zuführung einer unter Druck stehenden Flüssigkeit zu einer Vorrichtung oder einer Maschine, insbesondere zum Anschluß einer Wasch- oder Spülmaschine an einen Wasserleitungsanschluß, wobei dem mit der Druckmittelleitung verbindbarem Schlauchteil und dem geräteseitigen Schlauchteil je ein Anschlußglied zugeordnet ist, dadurch gekennzeichnet, daß das mit der Druckmittelleitung direkt oder indirekt verbindbare Anschlußglied (1) mit dem geräteseitigen Anschlußglied (36) über einen den der Zuführung der Flüssigkeit dienenden ersten Schlauchteil (35) dichtend umhüllenden zweiten Schlauchteil (38) verbunden ist, und das der von beiden Schlauchteilen gebildete Zwischenraum (41) mit einer Abflußleitung und oder dem Hilfsglied (14, 18, 23, 44) eines die Flüssigkeitszufuhr zum ersten Schlauchteil (35) absperrenden Absperrventils (4) oder dergleichen verbunden ist.

2. Schlauchvorrichtung nach Anspruch 1, dadurch gekennzeichnet, daß das Riegelglied (14) des Absperrventils (4) mit einem elektr.- oder elektromechanischen Steuerorgan (43) verbunden ist, das mit einem bodenseitigen, durch Flüssigkeit aussteuerbaren Impulsgeber (46) in Wirkverbindung steht.

3. Schlauchvorrichtung nach einem der Ansprüche 1 bis 2, dadurch gekennzeichnet, daß das Absperrventil (4) einen durch ein Riegelglied (14) in Offenstellung gehaltenen Schließkörper (9) aufweist, und daß der Zwischenraum (41) zwischen dem ersten und dem zweiten Schlauchteil (35 bzw. 38) mit einem Zylinder (25) für einen Steuerkolben (23) oder dergleichen in Verbindung steht, der im Entriegelungssinne mit dem, dem Schließkörper zugeordneten Riegelglied (14) in Wirkverbindung steht.

4. Schlauchvorrichtung nach einem der Ansprüche 1 bis 3, dadurch gekennzeichnet, daß das Riegelglied des Absperrventils (4) einen in eine Einkerbung (13) oder eine Aussparung des Schließkörpers (9) im Verriegelungssinne eingreifenden Stift (14) oder dergleichen aufweist, der mit einer radialen Aussparung (21) oder dergleichen versehen ist, in die eine Kugel (17) einer federbelasteten Kugelraste (18) eingreift.

5. Schlauchvorrichtung nach Ausspruch 4, dadurch gekennzeichnet, daß der Steuerkolben (23) einen auf eine Schräge (30) des Stiftes (14) einwirkenden Vorsprung (29) aufweist.

6. Schlauchvorrichtung nach einem der Ansprüche 1 bis 5, dadurch gekennzeichnet, daß das den Steuerkolben (23) des Absperrventils (4) aufnehmende Gehäuseteil (6) eine Führungsbohrung (15) oder mehrere Führungsbohrungen (15) für die Sperrglieder des Riegelgliedes (14) aufweist.

7. Schlauchvorrichtung nach einem der Ansprüche 2 bis 6, dadurch gekennzeichnet, daß die Stirnwandung (24) des Ventilgehäuses (6) des Steuerkolbens (23) eine von einem Vorsprung, dieses durchsetzte Führungsbohrung (48) oder dergleichen aufweist und daß der Vorsprung (29) in Wirkverbindung mit dem Verriegelungsglied (14) für den Schließkörper (9) des Absperrventils (4) im entriegelnden Sinne steht.

00005197

8. Schlauchvorrichtung nach einem der Ansprüche 1 bis 7, dadurch gekennzeichnet, daß der Zylinder (42) des Steuerkolbens (23) durch einen Ringzylinder gebildet ist, dessen inneres Zylinderteil (22) einen Anschlußstutzen (34) für den inneren Schlauchteil (35) aufweist, und daß das den Steuerkolben (23) umhüllende Zylinderteil (25) einen Anschlußstutzen (39) für den äußeren Schlauchteil (38) aufweist.

Fig.1

Fig.2

Fig. 3

Fig.4

40

Fig. 5

Fig. 6

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | DE - B - 2 227 212 (RUDNICKI)<br>Patentansprüche; Figuren *<br>-- | 1,3 |
| X | DE - A - 2 634 963 (KLEIN)<br>* Patentansprüche 1,2,5,6; Figuren *<br>-- | 1 |
| | DE - A - 2 360 274 (LICENTIA)<br>* Patentansprüche; Figuren *<br>-- | 1 |
| | FR - A - 1 388 747 (CHABANIER)<br>* Seite 4, linke Spalte, Zeile 4 bis Seite 5, linke Spalte, Zeile 46 *<br>-- | 1 |
| | DE - A - 2 606 656 (KLEIN)<br>* Seite 5, Zeilen 7-15, 25-30; Seite 6, Zeilen 1-8; Seite 8, Zeilen 5-15 *<br>-- | 2-4 |
| | DE - C - 100 633 (SCHOELLER)<br>* Patentanspruch; Figuren *<br>-- | 3-4 |
| | DE - A - 2 507 313 (LIEBHERR-MISCHTECHNIK)<br>* Patentanspruch; Figur *<br>-- | 4 |

./.

**KLASSIFIKATION DER ANMELDUNG (Int.Cl.²)**

D 06 F 39/08
F 16 K 17/32
F 16 L 35/00
F 17 D  5/02

**RECHERCHIERTE SACHGEBIETE (Int. Cl.²)**

D 06 F
F 16 L
F 16 K
F 17 D
G 01 M

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 17-07-1979 | D'HULSTER |

EPA form 1503.1  06.78

Europäisches
Patentamt

**EUROPÄISCHER RECHERCHENBERICHT**

00005197

Nummer der Anmeldung

EP 79 10 1127

-2-

| | **EINSCHLÄGIGE DOKUMENTE** | | KLASSIFIKATION DER ANMELDUNG (Int.Cl.²) |
|---|---|---|---|
| Kategorie | Kennzeichnung des Dokuments mit Angabe, soweit erforderlich, der maßgeblichen Teile | betrifft Anspruch | |
| | DE - A - 2 350 093 (LICENTIA) <br> * Seite 3, Zeilen 24-26; Seite 4 * <br><br> ----- | 1,3,4 | |
| | | | **RECHERCHIERTE SACHGEBIETE (Int. Cl.²)** |